# EUROPÄISCHE PATENTSCHRIFT

(11) **EP 3 448 581 B1**
(45) Veröffentlichungstag und Bekanntmachung des Hinweises auf die Patenterteilung: **06.01.2021**
(21) Anmeldenummer: 17730674.3
(22) Anmeldetag: 28.04.2017
(51) Int. Cl.: B05B 12/12, B05B 13/06, G01B 15/00

(54) **VORRICHTUNG UND VERFAHREN ZUR AUF- UND/ODER EINBRINGUNG VON PASTÖSEN ODER FLÜSSIGEN STOFFEN AUF ODER IN EIN KAROSSERIEBAUTEIL**
DEVICE AND METHOD FOR APPLYING PASTY OR LIQUID SUBSTANCES ONTO AND/OR INTRODUCING THEM INTO VEHICLE BODY COMPONENTS
DISPOSITIF ET PROCÉDÉ PERMETTANT L'APPLICATION ET/OU L'INCORPORATION DE SUBSTANCES PÂTEUSES OU LIQUIDES SUR ET/OU DANS UN ÉLÉMENT DE CARROSSERIE

(30) Priorität: 29.04.2016 DE 102016108023
(43) Veröffentlichungstag der Anmeldung: 06.03.2019
(73) Patentinhaber: Polyplan-GmbH Polyurethan-Maschinen, 82064 Straßlach-Dingharting (DE)
(72) Erfinder: RESCH, Johann, 82064 Strasslach (DE); ACHTER, Martin, 82067 Ebenhausen (DE); ZÄHRINGER, Michael, 83135 Schechen (DE)
(74) Vertreter: Koch Müller Patentanwaltsgesellschaft mbH
(86) Internationale Anmeldenummer: PCT/EP2017/060284
(87) Internationale Veröffentlichungsnummer: WO 2017/186952

(56) Entgegenhaltungen:
- WO-A1-2013/175392
- WO-A1-2014/054997
- WO-A2-2014/195794
- US-A1- 2009 179 081

## Beschreibung

Die Erfindung betrifft eine Vorrichtung sowie ein Verfahren zur Auf- und/oder Einbringung von pastösen oder flüssigen Stoffen auf oder in ein Karosseriebauteil.

Bei der Fertigung von Fahrzeugkarosserien ist es üblich, an Bauteilen fluide oder pastöse Stoffe zu applizieren, beispielsweise Polyurethan-Schäume zur Dämmung, oder Wachs als Korrosionsschutz. Diese Applikation kann bei hohlen Bauteilen wie Fahrzeugtüren erst nach dem Zusammenbau erfolgen, so dass die Applikation hier üblicherweise durch ein Loch in dem Karosseriebauteil erfolgt. Hierzu wird ein Förderkopf, der mit einer zugehörigen Stoff-Ausbringungseinrichtung verbunden ist, in das Loch eingeführt und der Stoff ausgebracht.

Es wird bei diesen Produktionsprozessen eine zunehmende Automatisierung angestrebt, um eine gute Präzision zu erreichen. Bei der oben genannten Stoffapplikation ist eine Automatisierung jedoch problematisch, da die Position und die Form des Lochs zuverlässig ermittelt werden müssen, um eine korrekte Applikation sicherzustellen. Kamerasysteme mit entsprechender Bildverarbeitung sind hier nicht gut geeignet, da die Karosseriebauteile häufig verschmutzt sind und die Bilderkennung somit fehlerhaft ist.

Aus der WO 2014/054997 A1 ist eine Vorrichtung zum Aufbringen von Spritzbeton bekannt, wobei die Vorrichtung mehrere um eine Sprühdüse angeordnete Radarsensoren umfasst.

Aus der US 2009/0179081 A1 ist eine Spritzpistole mit einer Sensoreinheit zur Bestimmung eines Abstands der Spritzpistole zu einem Objekt bekannt.

Eine Aufgabe der vorliegenden Erfindung ist es daher, eine Vorrichtung sowie ein Verfahren zur Auf- und/oder Einbringung von pastösen oder flüssigen Stoffen auf oder in ein Karosseriebauteil aufzuzeigen, wobei eine hohe Zuverlässigkeit und Präzision der Applizierung erreicht werden soll.

Diese Aufgabe wird insbesondere durch eine Vorrichtung zur Auf- und/oder Einbringung von pastösen oder flüssigen Stoffen auf und/oder in ein Karrosseriebauteil gelöst, umfassend eine Erkennungseinheit zur Struktur-, insbesondere Oberflächenstruktur-, Loch- und/oder Hohlraumerkennung des Karosseriebauteils, wobei die Erkennungseinheit mit Mikrowellen- und/oder Millimeterwellen arbeitet, die Erkennungseinheit umfassend ein Sende-/Empfangsarray, auf dem mindestens ein Sendemodul, das im Mikrowellen-und/ oder Millimeterwellenbereich arbeitet, sowie eine Mehrzahl von Empfangsmodulen, die im Mikrowellen- und/oder Millimeterwellenbereich empfangen, in einer festen relativen Positionierung zueinander angeordnet sind,wobei weiterhin eine Ansteuerungsvorrichtung vorgesehen ist, die das mindestens eine Sendemodul und die Mehrzahl von Empfangsmodulen, insbesondere einzeln, adressieren kann, wobei das Sendemodul durch die Ansteuerungsvorrichtung zur Aussendung eines Signals angesteuert wird,wobei die Empfangsmodule zur Erfassung von reflektierten und/oder gebrochenen Signale ausgebildet sind und wobei eine Rechnereinheit vorgesehen ist, die aus den gewonnenen Empfangsdaten der Mehrzahl von Empfangsmodulen ein Bild des zu vermessenden Loches und/oder Hohlraumes errechnet, wobei das Sendemodul durch die Ansteuerungsvorrichtung zur Aussendung eines Kurzzeitpulses angesteuert wird, der Kurzzeitpuls in den zu vermessenden Körper eindringt und in dem Inneren an Hohlraumwänden reflektiert und/oder gebrochen wird,wobei die Empfangsmodule Phase, Betrag und/oder spezifische Frequenzanteile des reflektierten Signals jeweils an dem Empfangsmodul zugeordneten Ort relativ zum Sendemodul als Empfangsdaten detektieren, wobei der Kurzzeitpuls nicht länger als 1 ns oder nicht länger als 100 ps, weiter oder nicht länger als 20 ps, ist und ein Empfangszeitfenster vorgebbar ist, innerhalb dessen die Empfangsmodule Strahlung detektieren. Durch eine derartige Vorrichtung können selbst unter schwierigen Bedingungen Strukturen zuverlässig erkannt werden, so dass eine präzise Applikation erreicht werden kann. Insbesondere wird die Zuverlässigkeit der Vorrichtung nicht oder zumindest nur wenig von Verschmutzungen (Schmutzpartikeln) beeinträchtigt.

Unter Mikrowellen- und/oder Millimeterwellen sollen insbesondere elektromagnetische Wellen in einem Frequenzbereich von 1 - 300 GHz verstanden werden.

Mit einer derartigen Erkennungseinheit können die Strukturen besonders präzise, auch unter schwierigen Bedingungen, erkannt werden.

Dadurch, dass die Erkennungseinheit mit Mikrowellen arbeitet, sind mögliche Störeinflüsse deutlich reduziert. Es wurde weiterhin von den Erfindern erkannt, dass gerade im vorliegenden Anwendungsfall, die Einbuße hinsichtlich der Auflösung aufgrund der größeren Wellenlänge (gegenüber dem elektromagnetischen Spektrum im sichtbaren Bereich) hinnehmbar ist. Dieser (zumindest scheinbare) Nachteil wird also bewusst in Kauf genommen.

In einer konkreten Ausführungsform, insbesondere zur Vermessung bzw. Erfassung einer Oberfläche, wird das Sendemodul durch die Ansteuerungsvorrichtung zur Aussendung eines Signals mit seitlich veränderbarer Frequenz angesteuert. Dabei können die Empfangsmodule Phase und Betrag des reflektierten Signals jeweils an dem dem Empfangsmodul zugeordneten Ort relativ zum Sendemodul als Empfangsdaten detektieren. Eine derartige Vorrichtung eignet sich besonders gut, um Oberflächenstrukturen und/oder Löcher zu erkennen (zu vermessen). Bislang wurden Oberflächen unter Einsatz elektromagnetischer Strahlung im für das menschliche Auge sichtbaren Frequenzbereich untersucht, wobei sich insbesondere Techniken der Bilderkennung in diesem Zusammenhang entwickelt haben. Allerdings können gerade bei Verwendung des spektralen Bereichs, der für das menschliche Auge sichtbar ist, größere Störfaktoren Bilderkennung und Bildanalyse erschweren, wie beispielsweise Streulicht, Sonneneinstrahlung, etc. Außerdem können Verschmutzungen optischer Systemkomponenten wie beispielsweise Linsen das Messergebnis stark beeinträchtigen.

Erfindungsgemäß, insbesondere zur Vermessung bzw. Erfassung eines 3-dimensionalen (dielektrischen) Objekts bzw. Körpers, kann das Sendemodul durch die Ansteuerungsvorrichtung zur Aussendung eines Kurzzeitpulses (ggf. mit hohem spektralem Anteil) angesteuert werden, wobei der Kurzzeitpuls in den zu vermessenden (dielektrischen) Körper eindringt und in dem Inneren an Hohlraumstrukturen reflektiert und/oder gebrochen werden kann. Dabei können die Empfangsmodule Phase, Betrag und/oder spezifische Frequenzanteile des reflektierten Signals jeweils an dem dem Empfangsmodul zugeordneten Ort relativ zum Sendemodul als Empfangsdaten detektieren. Der Kurzzeitpuls ist vorzugsweise nicht länger als 1 ns, vorzugsweise nicht länger als 100 ps, weiter vorzugsweise nicht länger als 20 ps. Vorzugsweise ist ein Empfangszeitfenster vorgebbar, innerhalb dessen die Empfangsmodule Strahlung detektieren. Eine derartige Vorrichtung eignet sich besonders gut zur Erkennung (Vermessung) von Hohlraumstrukturen innerhalb eines (dielektrischen) Karosseriebauteils. Ein Mikrowellenpuls kann in einen zu untersuchenden dielektrischen Körper eindringen und wird an Grenzflächen zwischen Bereichen unterschiedlicher Dichte gebrochen und reflektiert. Je nach Zusammensetzung und Beschaffenheit der örtlichen Änderung der Dichte in dem untersuchten Karosseriebauteil ändert sich außerdem die spektrale Zusammensetzung eines Mikrowellenpuls-Echos. Grundsätzlich ist es bekannt, dass Röntgenstrahlen dielektrische Objekte durchdringen können. Röntgenstrahlen werden auch in der Untersuchung von Objekten wie Kunststoffen, Lebensmitteln, Organismen, etc. eingesetzt; allerdings wird dabei vornehmlich in Transmission gemessen, so dass letztendlich Schattenbilder erzeugt werden. Röntgenstrahlung ist darüber hinaus in höherer Intensität für den Menschen schädlich, so dass beim Umgang mit Röntgenstrahlen erhebliche Einschränkungen bestehen und zu Recht bestehende Sicherheitsvorschriften eingehalten werden müssen. Bei der erfindungsgemäßen Verwendung von Mikrowellen hingegen, ist eine Vermessung ohne die zuvor beschriebenen Nachteile bei einer Vermessung mit Röntgenstrahlung auskommt.

In einer bevorzugten Weiterbildung ist auf dem Sende-/Empfangsarray eine Mehrzahl von Sendemodulen in fester Positionierung zueinander vorgesehen, die von der Ansteuervorrichtung jeweils einzeln angesteuert werden können. Insofern kann nicht nur an unterschiedlichen Positionen ein reflektiertes bzw. gebrochenes Signal empfangen werden, sondern es können auch von unterschiedlichen Positionen Signale auf das zu vermessende Karosseriebauteil hin abgesandt werden. Hierdurch kann die Qualität der ortsauflösenden Vermessung noch erhöht werden, insbesondere wenn Signale von unterschiedlichen Sendepositionen aus abgesandt werden.

Insbesondere gemäß einer oben genannten Ausführungsform zur Vermessung bzw. Erfassung einer Oberfläche werden die Sendemodule sequenziell angesteuert. Insbesondere senden die Sendemodule nacheinander, während jeweils eine Mehrzahl von Empfangsmodulen empfängt. Die Empfangsmodule erfassen, insbesondere messen, Phase und Betrag des reflektierten Signals, wobei daraus ein für jedes Empfangsmodul eine Signallaufzeit bestimmbar, insbesondere berechenbar, ist. Vorzugsweise sendet nur ein einziges Sendemodul während der Messung der Empfangsmodule, wobei ein Sendemodul insbesondere so lange sendet, bis jedes der Empfangsmodule das reflektierte Signal empfangen hat und das Signal insbesondere ausgewertet ist.

In einer weiter bevorzugten Ausgestaltung kann vorgesehen sein, dass die Ansteuervorrichtung mit dem einen oder mehreren Sendemodulen und den Empfangsmodulen über BUS-Technologie kommunizieren. Der Aufwand, auch eine Vielzahl von Sende- und/oder Empfangsmodulen an eine Ansteuervorrichtung anzuschließen, diese jeweils anzusteuern oder auch gewonnene Empfangsdaten auszulesen, kann durch den Einsatz von BUS-Technologie mit geeigneten Übertragungsprotokollen erheblich vereinfacht werden.

In einer möglichen, bevorzugten Ausgestaltung ist eine aktuelle Konfiguration aktiver Sende- und Empfangsmodule durch die Ansteuerungsvorrichtung aus der Mehrzahl von Sendemodulen und der Mehrzahl von Empfangsmodulen frei wählbar. Vorzugsweise sind auch in zeitlicher Abfolge zueinander mehrere unterschiedliche Konfigurationen auswählbar.

Dadurch, dass die aktuelle Konfiguration aktiver Sende- und Empfangsmodule frei wählbar ist bzw. auch unterschiedliche Konfigurationen in zeitlicher Abfolge variiert werden kann, lässt sich ein noch genaueres Bild des zu untersuchenden Karosseriebauteils erstellen.

Vorzugsweise ist eine Synchronzeiterzeugungsvorrichtung vorgesehen, die mit der Ansteuerungsvorrichtung und dem mindestens einen Sendemodul und der Mehrzahl von Empfangsmodulen in Wirkverbindung steht. Dadurch kann eine (exakte) zeitliche Abstimmung zwischen den verschiedenen Sende- und Empfangsvorgängen (zur Synchronisierung der Phasen) erfolgen.

Vorzugsweise werden Lageinformationen mit Methoden der Trigonometrie aus Signallaufzeiten, Phase und/oder Betrag errechnet. Dadurch kann eine schnelle Erkennung und Vermessung des Karosseriebauteils erfolgen. Bei einer Ausführungsform zur Vermessung bzw. Erfassung einer Oberfläche werden Lageinformationen insbesondere mit Methoden der Trigonometrie aus Phase und Betrag errechnet, wobei auf Grundlage von Phase und Betrag auch Signallaufzeiten bestimmt werden können. Bei einer Ausführungsform zur Vermessung bzw. Erfassung eines 3-dimensionalen (dielektrischen) Objekts bzw. Körpers werden Lageinformationen insbesondere mit Methoden der Trigonometrie aus, insbesondere gemessenen, Signallaufzeiten errechnet.

In einer besonders bevorzugten Ausgestaltung sind auf dem Sende-/Empfangsarray jeweils ein Sendemodul und ein Empfangsmodul zu einer gemeinsamen Sende-/Empfangs-Baueinheit zusammengefasst. In einer nochmals bevorzugten Weiterbildung verfügen die gemeinsamen Sende-/Empfangs-Baueinheiten jeweils über eine eigene Sendeelektronik und/oder eine eigene Empfangselektronik. Hierdurch sind autarke Untereinheiten gebildet. Die Leistungselektronik ist damit an Ort und Stelle vorgesehen. Lediglich Ansteuerung und Kommunikation von Empfangsdaten sind dann zwischen Ansteuerungsvorrichtung und Sende-/Empfangsbaueinheit abzuwickeln. In einer besonders bevorzugten Ausführungsform umfasst die Sende-/Empfangsbaueinheit einen Chip, auf dem zumindest Teile der vorgenannten Elektronikeinheiten implementiert sein können.

Das Sende-/Empfangsarray umfasst bevorzugtermaßen eine Mehrzahl von Sende-/ Empfangsbaueinheiten in reihenförmiger Anordnung dicht aneinander liegend, wobei bevorzugtermaßen wenigstens in einer Erstreckung eine Reihe, weiter bevorzugt drei Reihen, noch weiter bevorzugt fünf Reihen, noch weiter bevorzugt sieben Reihen, vorzugsweise mindestens zehn Reihen benachbart nebeneinander angeordnet sind und weiter vorzugsweise mindestens zwei, weiter bevorzugt mindestens drei, weiter bevorzugt mindestens sieben, weiter bevorzugt mindestens 80 Sende-/Empfangs-Baueinheiten insgesamt vorliegen. Vom geometrischen Aufbau her ist das Sende-/Empfangsarray einem Facettenauge insofern nachempfunden, als eine Vielzahl von Sendemodulen und Empfangsmodulen dicht aneinander liegend nebeneinander angeordnet sind.

Weiterhin wird die Aufgabe gelöst durch ein Verfahren zur Auf- und/oder Einbringung von pastösen oder flüssigen Stoffen auf oder in ein Karosseriebauteil, insbesondere zur Auf- und/oder Einbringung von Wachs auf und/oder in ein Karosseriebauteil oder zur Auf- und/oder Einbringung von Schaumstoff auf und/oder in das Karosseriebauteil, umfassend die Schritte:
- Erkennen einer Struktur, insbesondere einer Oberflächenstruktur, eines Loches und/oder eines Hohlraumes, eines Karosseriebauteils mittels Mikrowellen- und/oder Millimeterwellen,
- Auf- und/oder Einbringen eines pastösen oder flüssigen Stoffes auf und/oder in das Karosseriebauteil, insbesondere Auf- und/oder Einbringen von Wachs auf und/oder in das Karosseriebauteil oder Auf- und/oder Einbringen von Schaumstoff auf und/oder in das Karosseriebauteil.

Vorzugsweise wird durch das Verfahren ein Bild des zu vermessenden Loches und/oder Hohlraumes erzeugt, insbesondere unter Verwendung eines Sende-/Empfangs-Arrays, auf dem mindestens ein Sendemodul, das im Mikrowellen- und/oder im Millimeterwellenbereich arbeitet, sowie eine Mehrzahl von Empfangsmodulen, die im Mikrowellen- und/oder Millimeterwellen in einer festen relativen Positionierung zueinander angeordnet sind, umfassend die folgenden Schritte:
- Veranlassen des Sendemoduls (12) zur Aussendung eines Signals,
- Empfangen von Signalanteilen, die an einer Oberfläche oder im Inneren der Karosserie gebrochen oder reflektiert wurden, als Empfangsdaten und
- Errechnen eines Bildes aus den gewonnenen Empfangsdaten.

In einer Ausführungsform des Verfahrens, insbesondere zur Vermessung bzw. Erfassung einer Oberfläche, wird das Sendemodul zur Aussendung eines Signals mit zeitlich veränderbarer Frequenz veranlasst, wobei Phase und Betrag des reflektierten und/oder gebrochenen Signals jeweils an dem dem Empfangsmodul zugeordneten Ort relativ zum Sendemodul als Empfangsdaten detektiert werden. Insbesondere werden die Sendemodule sequenziell angesteuert. Insbesondere senden die Sendemodule nacheinander, während jeweils eine Mehrzahl von Empfangsmodulen empfängt. Die Empfangsmodule erfassen, insbesondere messen, Phase und Betrag des reflektierten Signals, wobei daraus ein für jedes Empfangsmodul eine Signallaufzeit bestimmbar, insbesondere berechenbar, ist. Vorzugsweise sendet nur ein einziges Sendemodul während der Messung der Empfangsmodule, wobei ein Sendemodul insbesondere so lange sendet, bis jedes der Empfangsmodule das reflektierte Signal empfangen hat und das Signal insbesondere ausgewertet ist.

In einer alternativen Ausführungsform, insbesondere zur Vermessung bzw. Erfassung eines 3-dimensionalen (dielektrischen) Objekts bzw. Körpers, wird das Sendemodul zur Aussendung eines Kurzzeitpulses mit hohem spektralen Anteil veranlasst, wobei Signalanteile, die im Inneren des Objekts gebrochen oder reflektiert wurden, in einem einstellbaren Empfangszeitfenster als Empfangsdaten an den mehreren in fester relativer Positionierung zueinander angeordneten Empfangsmodulen als Empfangsdaten empfangen werden.

Die Empfangsmodule können Phase, Betrag und/oder spezifische Frequenzanteile des reflektierten oder gebrochenen Signals detektieren.

Es kann eine Mehrzahl von Sendemodulen, die in einer festen relativen Positionierung zueinander auf dem Sende-/Empfangs-Array angeordnet sind, Verwendung finden. Dabei können die Schritte
- Veranlassen des Sendemoduls zur Aussendung eines Signals mit zeitlich veränderbarer Frequenz und
- Empfangen von Signalanteilen, die an der Oberfläche reflektiert bzw. gebrochen werden, an den mehreren Empfangsmodulen mehrfach mit unterschiedlich ausgewählter Konfiguration jeweils aktueller Sende- und Empfangsmodule durchgeführt werden und
- dass aus sämtlichen gewonnenen Empfangsdaten das Bild der Oberfläche errechnet wird.

Weiterhin kann eine Mehrzahl von Sendemodulen, die in einer festen relativen Positionierung zueinander auf dem Sende-/Empfangs-Array angeordnet sind, Verwendung finden, wobei die folgenden Schritte
- Veranlassen des Sendemoduls zur Aussendung eines Kurzzeitpulses mit hohem spektralen Anteil und
- Empfangen von Signalanteilen, die im Inneren reflektiert bzw. gebrochen werden, an den mehreren Empfangsmodulen mehrfach mit unterschiedlich ausgewählter Konfiguration jeweils aktueller Sende- und Empfangsmodule durchgeführt werden und
- dass aus sämtlichen gewonnenen Empfangsdaten das Bild der Oberfläche errechnet wird.

Die Ansteuervorrichtung, das mindestens eine Sendemodul und die Empfangsmodule können über eine Synchronzeiterzeugungsvorrichtung gemeinsam synchronisiert werden.

Das mindestens eine Sendemodul und die Empfangsmodule können mit der Ansteuervorrichtung über BUS-Technologie miteinander kommunizieren.

Die Erfindung wird nachstehend auch hinsichtlich weiterer Merkmale und Vorteile anhand der Beschreibung in Ausführungsbeispielen und unter Bezugnahme auf die beiliegenden Zeichnungen näher erläutert. Hierbei zeigen:
- Fig. 1: eine schematische Darstellung einer Vorrichtung zur Auf- und/oder Einbringung von pastösen oder flüssigen Stoffen auf und/oder in ein Karosseriebauteil;
- Fig. 2a: eine schematische Vorderansicht eines Sende-/Empfangsarrays gemäß einem weiteren Ausführungsbeispiel der Erfindung;

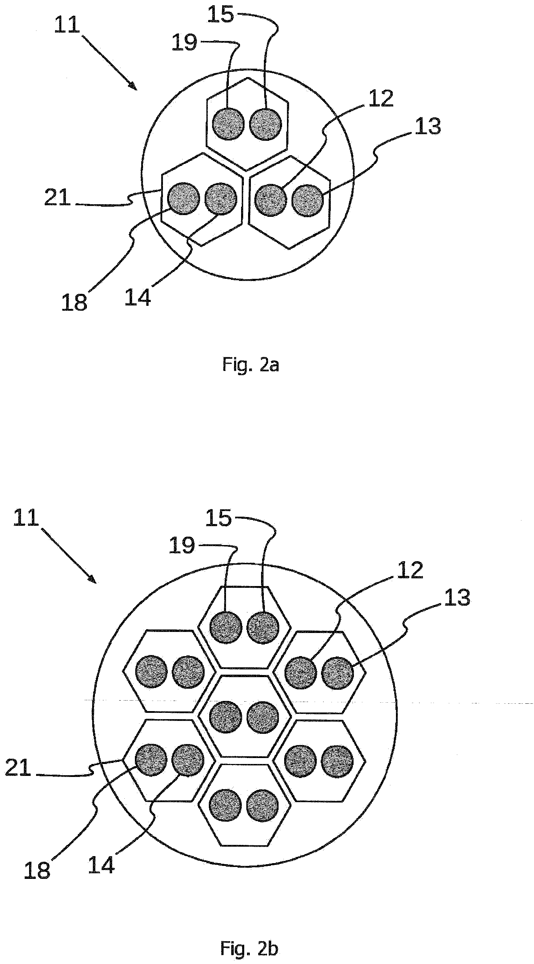

- Fig. 2a: eine schematische Vorderansicht eines Sende-/Empfangsarrays gemäß einem weiteren Ausführungsbeispiel der Erfindung;

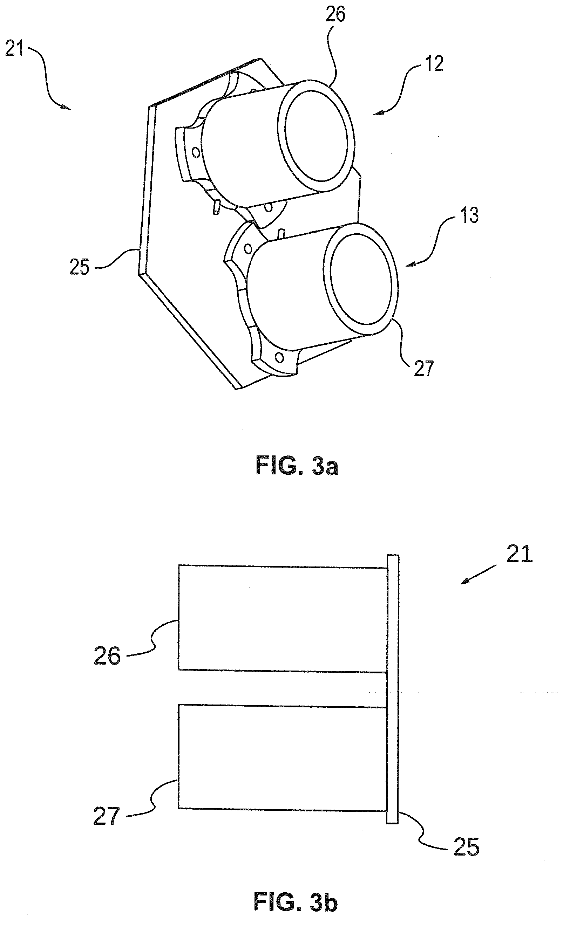

- Fig. 3a: eine perspektivische Ansicht eines Sende-/Empfangsarrays gemäß einem Ausführungsbeispiel der Erfindung;
- Fig. 3b: einen Schnitt der Sende-/Empfangsarrays gemäß einem weiteren Ausführungsbeispiel der Erfindung;

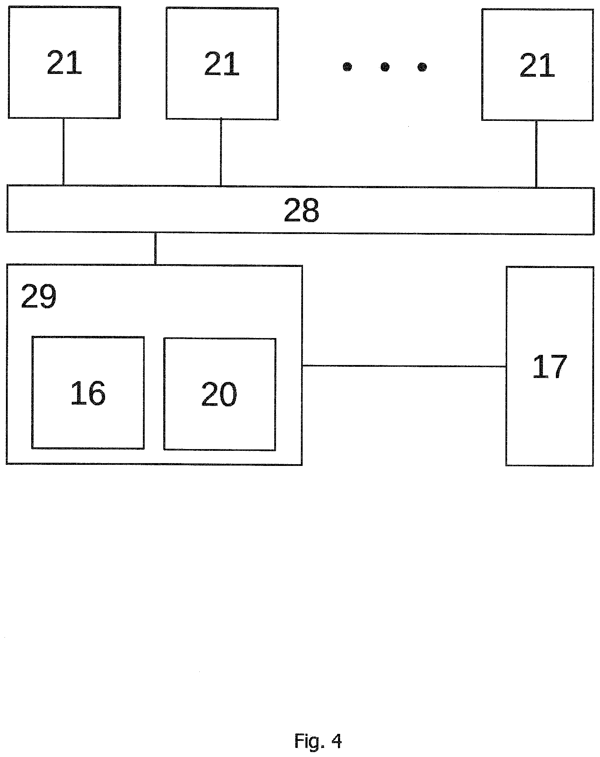

- Fig. 4: ein schematisches Blockschaltbild der Messanordnung gemäß einem Ausführungsbeispiel der Erfindung;

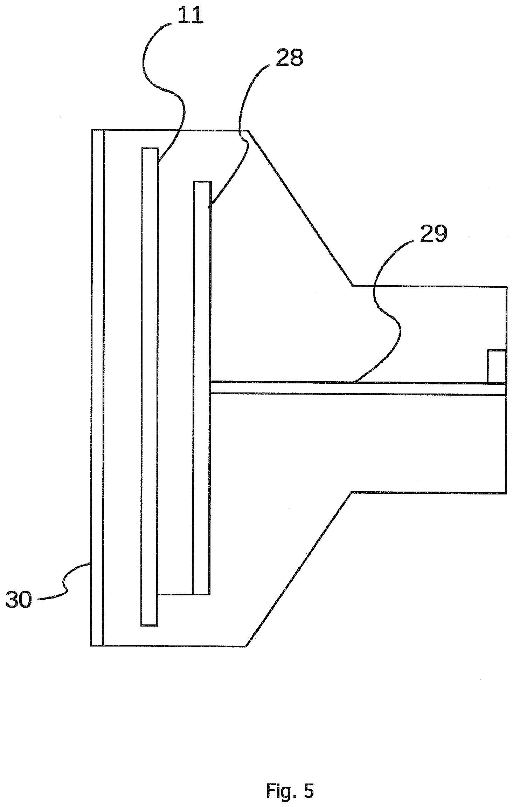

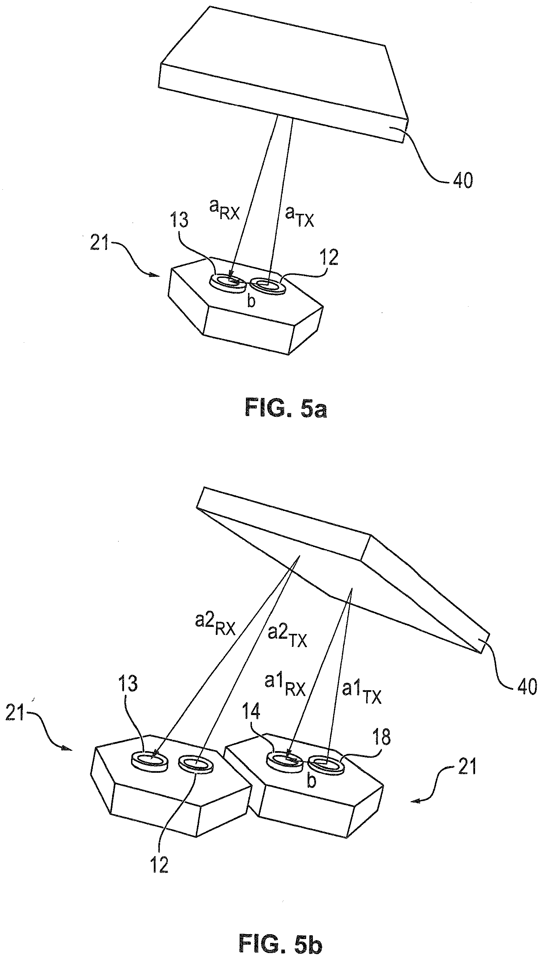

- Fig. 5: Einen Schnitt eines Sensors mit dem Sende-/Empfangsarray gemäß einem Ausführungsbeispiel der Erfindung;
- Fig. 5a: eine schematische Ansicht einer Sende-/Empfangsbaueinheit und einer zu vermessenden Oberfläche zur Erläuterung der Entfernungsbestimmung gemäß einem Ausführungsbeispiel der Erfindung;
- Fig. 5b: eine schematische Ansicht zweier Sende-/Empfangsbaueinheiten und einer zu vermessenden Oberfläche zur Erläuterung der Lageerkennung der zu vermessenden Oberfläche gemäß einem Ausführungsbeispiel der Erfindung;

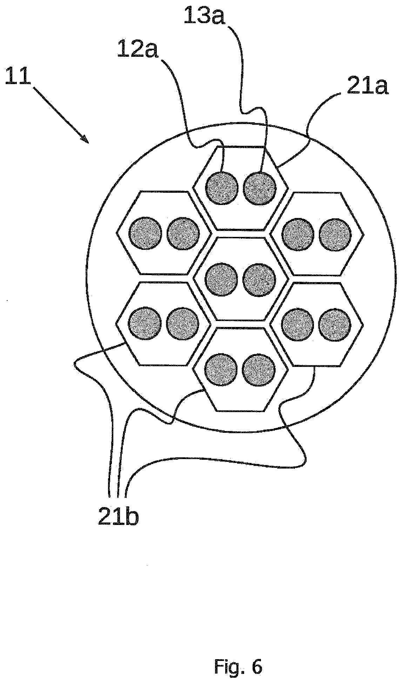

- Fig. 6: eine schematische Darstellung einer Konfiguration aktiver Sende- und Empfangsmodule des Sende-/Empfangsarrays gemäß einem Ausführungsbeispiel der Erfindung;

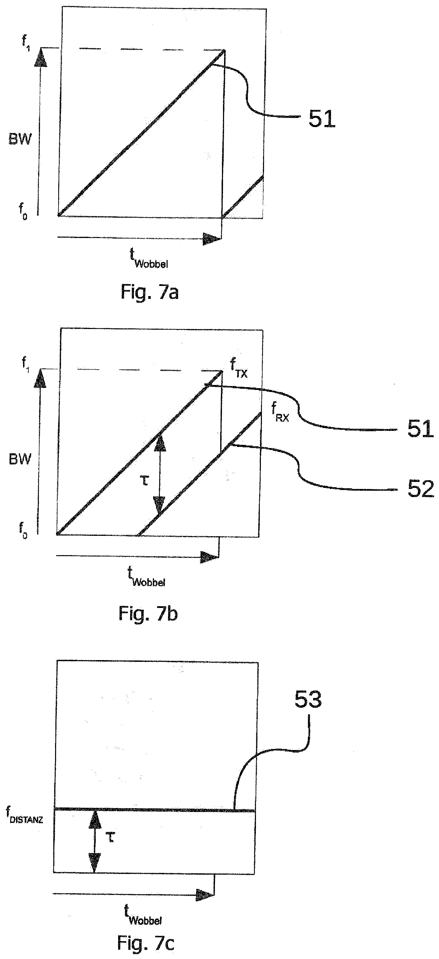

- Fig. 7a, b, c: zeitliche Verläufe der Frequenz von Sende-, Empfangs- und Differenzsignalen zur Signallaufzeitbestimmung gemäß einem Ausführungsbeispiel der Erfindung.

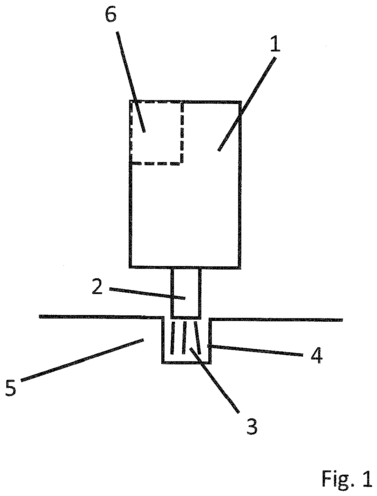

Fig. 1 zeigt eine schematische Darstellung einer Vorrichtung zur Auf- und/oder Einbringung von pastösen oder flüssigen Stoffen auf und/oder in ein Karosseriebauteil. Die Vorrichtung umfasst eine Ausbringvorrichtung 2, aus der ein flüssiger oder pastöser Stoff 3 in eine Struktur 4 eines Karosseriebauteiles 5 eingebracht werden kann. Weiterhin weist die Vorrichtung 1 eine (nur schematisch dargestellte) Erkennungseinheit 6 auf, die in der Lage ist, die Struktur 4 mittels Mikrowellen und/oder Millimeterwellen zu detektieren, insbesondere zu vermessen.

Fig. 2a zeigt eine Vorderansicht eines Sende-/Empfangsarrays 11 gemäß einem Ausführungsbeispiel der Erfindung. Das Sende-/Empfangsarray 11 weist eine flächige Anordnung einer Vielzahl von Sendemodulen 12, 18, 19 und Empfangsmodulen 13, 14, 15 auf. Die Sende- und Empfangsmodule sind jeweils paarweise auf drei hexagonalen Baueinheiten vorgesehen, die feste Positionierungen zueinander aufweisen. In jedem Hexagon auf dem Sende-/Empfangsarray 11 sind ein Sendemodul 12 und ein Empfangsmodul angeordnet. Jedes Hexagon bildet somit eine Sende-/Empfangsbaueinheit 21.

Fig. 2b zeigt eine Vorderansicht eines Sende-/Empfangsarrays 11 gemäß einem weiteren Ausführungsbeispiel der Erfindung. Hier sind insgesamt sieben Sende-/Empfangsbaueinheiten 21 vorgesehen, die auf einem hexagonalen Raster ähnlich einem Facettenauge angeordnet sind und wiederum feste Positionierungen aller Elemente zueinander aufweisen.

Fig. 3a zeigt eine perspektivische Ansicht einer solchen Sende-/Empfangsbaueinheit 21. Das Sendemodul 12 und das Empfangsmodul 13 weisen Antennenelemente auf, die als Rundhohlleiter 27 in Form von metallischen Röhrchen gebildet sind. Die Rundhohlleiter 27 sind auf einem Basis-Modul 25 befestigt, das durch eine hexagonale Platine gebildet ist. In Fig. 3b ist ein Schnitt der Sende-/Empfangsbaueinheit 21 gezeigt. Die Abschlussflächen auf dem Basis-Modul 25 sind metallisch beschichtet, so dass die Rundhohlleiter 27 zusammen mit dem Basis-Modul 25 einen einseitig geschlossenen Hohlleiter bilden. Beide Rundhohlleiter 27 besitzen in ihrem Inneren einen (nicht gezeigten) Mikrowellen- bzw. Millimeterwellenstrahler, der die entsprechende Strahlung emittiert bzw. absorbiert. Die Rundhohlleiter 27 bewirken eine Richtwirkung der Sende- und Empfangsmodule senkrecht zur Arrayebene. Außerdem werden durch die Rundhohlleiter 27 benachbarte Sende- und Empfangselemente gegeneinander abgeschirmt. Die maximal mögliche Sendeleistung ist durch Überkopplungen zwischen benachbarten Sende- und Empfangsmodulen begrenzt, weswegen diese Überkopplungen so weit wie möglich begrenzt werden müssen. Aufgrund der Abschirmungswirkung der Rundhohlleiter 27 können die Abstände zwischen Sende- und Empfangsmodulen, und somit das Sende-/Empfangsarray 11, klein gehalten werden.

Auf der Platine des Basis-Moduls 25 ist die Sende- und Empfangselektronik 22, 23 für die Sende- und Empfangsmodule 12, 13 untergebracht. Diese umfasst neben Elektronik zur Aufbereitung der Betriebs- und Arbeitsfrequenzen auch die Auswerteelektronik. Alle elektronischen Bauteile, die zum Betrieb der Sende- und Empfangsmodule 12, 13 benötigt werden, sowie Auswerteelektronik sind in der Sende-/Empfangsbaueinheit 21 integriert. So ist eine autarke und kompakte Einheit gebildet, die sich aufgrund der hexagonalen Struktur zu dem dichten und regelmäßigen Sende-/Empfangsarray 11 aus Fig. 2a oder 2b anordnen lassen. Da jede Sende-/Empfangsbaueinheit 21 identisch aufgebaut ist, können sie in großer Stückzahl hergestellt werden. Auch der Austausch einzelner Sende-/Empfangsbaueinheiten 21 ist somit einfach möglich.

In Fig. 4 ist ein schematisches Blockschaltbild der Messanordnung gemäß einem Ausführungsbeispiel der Erfindung gezeigt. Eine Vielzahl von Sende-/Empfangsbaueinheiten 21, die das Sende-/Empfangsarray 11 bilden, sind mit einer Leiterplatte 28 verbunden, auf der Elektronik zur Generation von Mikrowellensignalen und Verstärkung sowie Auswertung der empfangenen Signale untergebracht ist. Diese ist mit einer Steuerplatine 29 verbunden, auf der sich eine Ansteuerungsvorrichtung 16 und eine Synchronzeiterzeugungsvorrichtung 20 befinden, deren Funktionsweise im Folgenden erklärt wird. Die Steuerplatine 29 ist mit einer Recheneinheit 17 verbunden, auf der eine weitere Verarbeitung der Signaldaten möglich ist.

Fig. 5 zeigt einen Schnitt eines Sensors, der das Sende-/Empfangsarray 11 umfasst. Der Sensor hat eine kreisförmige Front mit einem sich verjüngenden Gehäuse, das in einen Schaft ausläuft. Eine Abdeckung 30 bedeckt die Vorderseite des Sensors. Die Abdeckung 30 ist aus einem Kunststoff gefertigt, der für die verwendeten Mikrowellen transparent ist, beispielsweise aus 1,5 mm starkem TEFLON (oder Keramik oder noch einem anderen Material).

Unter der Abdeckung 30 befindet sich das Sende-/Empfangsarray 11. Im Schnitt sind die Rundhohlleiter 27 der Sende- und Empfangsmodule zu sehen, ebenso wie der zweilagige Aufbau der Sende-/Empfangsbaueinheiten 21.

Hinter dem Sende-/Empfangsarray 11 befindet sich die kreisscheibenförmige Leiterplatte 28, die mit dem Sende-/Empfangsarray 11 verbunden ist. Diese enthält Mikrowellen-Mischstufen, Verstärker und Phasendetektoren, die benötigt werden, um die Mikrowellensignale für die Sendemodule zu erzeugen und die empfangenen Signale zu verstärken und weiter auszuwerten.

Im Schaft des Sensors befindet sich die Steuerplatine 29, die mit der kreisscheibenförmigen Leiterplatte 28 verbunden ist. Auf der Steuerplatine 29 befinden sich eine Stromversorgung für die gesamte Vorrichtung, die Ansteuerungsvorrichtung 16, die Synchronzeiterzeugungsvorrichtung 20, sowie Signalverarbeitungselemente, die eine Vorverarbeitung der gewonnen Daten übernehmen, und ein Anschluss für den Sensor an die Rechnereinheit 17 (nicht gezeigt), auf der die vorverarbeiteten Daten weiter verarbeitet werden können. Die Verbindung wird über Ethernet hergestellt. Dazu benötigte Elektronik (nicht gezeigt) ist ebenfalls auf der Steuerplatine 29 angeordnet

Die Ansteuerungsvorrichtung 16 steuert den Bildgebungsprozess. Die Ansteuerungsvorrichtung 16 kann jedes Sendemodul 12, 18, 19 und jedes Empfangsmodul 13, 14, 15 einzeln ansteuern. Die Kommunikation zwischen den Komponenten erfolgt über einen seriellen Datenbus. Im vorliegenden Ausführungsbeispiel ist dies der I²C-Datenbus (Inter-Integrated-Circuit-Bus). Als Master fungiert hierbei die Ansteuerungsvorrichtung 16, die die abgestimmte Steuerung der am Bildgebungsprozess beteiligten Komponenten steuert.

Die Synchronzeiterzeugungsvorrichtung 20 ist mit der Ansteuerungsvorrichtung 16 und den einzelnen Modulen des Sende-/Empfangsarrays 11 verbunden. Die Ansteuerungsvorrichtung 16 und die Sende- und Empfangsmodule werden über die Synchronzeiterzeugungsvorrichtung 20 getaktet und synchronisiert. Die Synchronzeiterzeugungsvorrichtung 20 erzeugt dazu einen Systemtakt, um eine exakte Phasenmessung in Mikrowellenbändern und eine genaue Synchronisation aller Komponenten zu ermöglichen. Im vorliegenden Ausführungsbeispiel ist die Synchronzeiterzeugungsvorrichtung 20 durch einen Quarz mit einer hohen Frequenzstabilität gebildet.

Im Folgenden wird ein Verfahren zur ortsauflösenden Vermessung von Oberflächen eines Karosseriebauteils unter Verwendung der eben beschriebenen Bilderzeugungsvorrichtung beschrieben.

Die ortsauflösende Vermessung einer Oberfläche 40 basiert auf der Messung der Phase und des Betrags eines von einem Sendemodul 12 ausgesendeten Signals, das von der Oberfläche 40 reflektiert wird und von einem Empfangsmodul 13 detektiert wird. In Fig. 5a ist eine perspektivische Ansicht der gegenseitigen Lage der Oberfläche 40 und einer Sende-/Empfangsbaueinheit 21 gezeigt. Die Oberfläche 40 verläuft parallel zu der Oberfläche der Sende-/Empfangsbaueinheit 21. Ein von dem Sendemodul 12 ausgesendetes Signal wird von der Oberfläche 40 reflektiert und an dem Empfangsmodul 13 detektiert. Die auf Grundlage der Phase und des Betrags bestimmte Laufzeit des Signals wird in eine Signallaufstrecke umgerechnet. Da die gegenseitige Lage des Sendemoduls 12 und des Empfangsmoduls 13 auf der Sende-/Empfangsbaueinheit 21 bekannt ist, lässt sich mittels trigonometrischer Berechnungen die Entfernung zwischen Sende-/Empfangsbaueinheit 21 und Oberfläche 40 berechnen.

Fig. 5b zeigt eine mögliche Applikation in einem Fall, in dem die Oberfläche 40 nicht parallel zu der Oberfläche des Sende-/Empfangsarrays 11 verläuft. Um die Raumlage der Oberfläche 40 zu bestimmen, bedarf es in diesem Fall mehrerer Sende-/Empfangsbaueinheiten 21. In dem in Fig. 5b gezeigten Beispiel sendet zunächst das Sendemodul 12 ein Signal aus, das von dem zugehörigen Empfangsmodul 13 auf der gleichen Sende-/Empfangsbaueinheit empfangen wird und aus dessen Laufzeit der Abstand des Reflektionspunktes auf der Oberfläche 40 berechnet werden kann. Danach wird das Sendemodul 18 zur Aussendung eines Signals angesteuert und das Empfangsmodul 14 empfängt das reflektierte Signal, um die Distanz des zugehörigen Reflektionspunktes auf der Oberfläche 40 zu bestimmen. Die Sendemodule 12 und 18 werden also sequenziell angesteuert. Insbesondere sendet das Sendemodul 12 oder das Sendemodul 18 während jeweils die Empfangsmodule 13 und 14 empfangen. Aus der bekannten gegenseitigen Lage der Sende-/Empfangseinheiten 21 und damit aller Sendemodule 12, 18 und Empfangsmodule 13, 14 kann so die Lage der Oberfläche 40 bestimmt werden.

Bei der Vermessung komplexerer Oberflächen ist es möglicherweise vorteilhaft, eine komplexere Messkonfiguration zu verwenden. Da alle Sende- und Empfangsmodule auf dem Array 11 individuell ansteuerbar sind und untereinander, wie oben beschrieben, per BUS-Kommunikation erfolgt, können beliebige Messkonfigurationen zur Erzeugung von Bildinformation verwendet werden. Fig. 6 zeigt schematisch eine solche Messkonfiguration des Sende-/Empfangsarrays 11. In der gezeigten Konfiguration sind vier Sende-/Empfangseinheiten aktiviert. Die oberste Sende-/Empfangsbaueinheit 21a ist in dieser Konfiguration als Sendeeinheit gesetzt. Das zugehörige Sendemodul 12a wird von der Ansteuerungsvorrichtung 16 angesteuert, Mikrowellensignale auszusenden. Das zugehörige Empfangsmodul 13a ist ebenfalls aktiviert. Die übrigen drei aktiven Sende-/Empfangsbaueinheiten 21b sind als Empfänger gesetzt, hier sind also lediglich die Empfangsmodule aktiviert. Alle aktivierten Empfangsmodule bestimmen die Laufzeit des von dem Sendemodul 12a ausgesandten Signals, das an der vermessenen Oberfläche reflektiert wird. Aus trigonometrischen Beziehungen kann ortsaufgelöste Information über die zu vermessende Oberfläche gewonnen werden. Da die Empfangsmodule Phase und Betrag des reflektierten Signals detektieren, können so detaillierte Informationen über die Topologie der zu vermessenden Oberfläche gewonnen werden. Die verwendeten Messkonfigurationen können dynamisch verändert werden. Für die ortsauflösende Vermessung der Oberfläche können die Messergebnisse mehrerer Messkonfigurationen kombiniert werden.

Für das beschriebene Messverfahren wird die Frequenz des von den Sendemodulen ausgesandten Signals zeitlich verändert. Fig. 7a zeigt den zeitlichen Frequenzverlauf des ausgesandten Signals 51 bei einer Messung. Die Sendefrequenz wird zyklisch linear, logarithmisch oder sprunghaft (oder auf eine noch andere Art) variiert, analog einer Sägezahnspannung. Dies wird auch als Wobbeln bezeichnet.

In Fig. 7b ist der zeitliche Verlauf der Frequenz des Sendesignals 51 zusammen mit dem zeitlichen Verlauf eines detektierten Signals 52 dargestellt. Aufgrund des Laufzeitunterschieds ist die Frequenz des detektierten Signals 52 zeitlich konstant verschoben.

Durch Subtraktion der Signale 51 und 52 erhält man das in Fig. 7c gezeigte Differenzsignal 53. Die Frequenz des Differenzsignals 53 ist zeitlich konstant und steht in direktem Zusammenhang mit der Laufzeit. Bei bekannter Änderungsrate des ausgesandten Signals 51 lässt sich somit aus der Frequenz des Differenzsignals 53 die Signallaufzeit bestimmen, die dann in eine Signallaufstrecke umgerechnet wird und als Grundlage für die ortsauflösende Vermessung der Oberfläche 40 dient.

### Bezugszeichenliste

- 1: Vorrichtung
- 2: Ausbringeinrichtung
- 3: Stoff
- 4: Struktur
- 5: Karosseriebauteil
- 6: Erkennungseinheit
- 11: Sende-/Empfangsarray
- 12, 18, 19: Sendemodul
- 13, 14, 15: Empfangsmodul
- 16: Ansteuerungsvorrichtung
- 17: Rechnereinheit
- 20: Synchronzeiterzeugungsvorrichtung
- 21: Sende-/Empfangsbaueinheit
- 22: Sendeelektronik
- 23: Empfangselektronik
- 25: Basis-Modul
- 26, 27: Rundhohlleiter
- 28: runde Leiterplatte
- 29: Steuerplatine
- 30: Abdeckung
- 101: Röntgenquelle
- 102: Messobjekt
- 103: Fotoplatte/Sensor

## Patentansprüche

1. Vorrichtung (1) zur Auf- und/oder Einbringung von pastösen oder flüssigen Stoffen auf und/oder in ein Karosseriebauteil (4), umfassend eine Erkennungseinheit (6) zur Struktur-, Loch- und/oder Hohlraumerkennung des Karosseriebauteils, wobei die Erkennungseinheit mit Mikrowellen- und/oder Millimeterwellen arbeitet,
die Erkennungseinheit (6) umfassend ein Sende-/Empfangsarray (11), auf dem mindestens ein Sendemodul (12), das im Mikrowellen- und/oder Millimeterwellenbereich arbeitet, sowie eine Mehrzahl von Empfangsmodulen (13, 14, 15), die im Mikrowellen- und/oder Millimeterwellenbereich empfangen, in einer festen relativen Positionierung zueinander angeordnet sind,
wobei weiterhin eine Ansteuerungsvorrichtung (16) vorgesehen ist, die das mindestens eine Sendemodul (12) und die Mehrzahl von Empfangsmodulen (13, 14, 15), insbesondere einzeln, adressieren kann, wobei das Sendemodul (12) durch die Ansteuerungsvorrichtung (16) zur Aussendung eines Signals angesteuert wird,
wobei die Empfangsmodule (13, 14, 15) zur Erfassung von reflektierten und/oder gebrochenen Signale ausgebildet sind
und wobei eine Rechnereinheit (17) vorgesehen ist, die aus den gewonnenen Empfangsdaten der Mehrzahl von Empfangsmodulen (13, 14, 15) ein Bild des zu vermessenden Loches und/oder Hohlraumes errechnet, wobei das Sendemodul (12) durch die Ansteuerungsvorrichtung (16) zur Aussendung eines Kurzzeitpulses angesteuert wird, der Kurzzeitpuls in den zu vermessenden Körper eindringt und in dem Inneren an Hohlraumwänden reflektiert und/oder gebrochen wird,
wobei die Empfangsmodule (13, 14, 15) Phase, Betrag und/oder spezifische Frequenzanteile des reflektierten Signals jeweils an dem Empfangsmodul (13, 14, 15) zugeordneten Ort relativ zum Sendemodul (12) als Empfangsdaten detektieren, wobei der Kurzzeitpuls nicht länger als 1 ns oder nicht länger als 100 ps, weiter oder nicht länger als 20 ps, ist und ein Empfangszeitfenster vorgebbar ist, innerhalb dessen die Empfangsmodule (13, 14, 15) Strahlung detektieren.

2. Vorrichtung nach Anspruch 1,
**dadurch gekennzeichnet, dass**
das Sendemodul (12) durch die Ansteuerungsvorrichtung (16) zur Aussendung eines Signals mit zeitlich veränderbarer Frequenz angesteuert wird,
wobei die Empfangsmodule (13, 14, 15) Phase und Betrag des reflektierten Signals jeweils an dem dem Empfangsmodul (13, 14, 15) zugeordneten Ort relativ zum Sendemodul (12) als Empfangsdaten detektieren.

3. Vorrichtung nach einem der vorangehenden Ansprüche,
**dadurch gekennzeichnet, dass**
auf dem Sende-/Empfangsarray (11) eine Mehrzahl von Sendemodulen (12, 18, 19) in fester Positionierung zueinander vorgesehen ist, die von der Ansteuerungsvorrichtung (16) jeweils einzeln angesteuert werden können.

4. Vorrichtung nach einem der vorangehenden Ansprüche,
**dadurch gekennzeichnet, dass**
die Ansteuerungsvorrichtung (16) mit dem einen oder mehreren Sendemodulen (12, 18, 19) und den Empfangsmodulen (13, 14, 15) über BUS-Technologie kommunizieren.

5. Vorrichtung nach einem der vorangehenden Ansprüche
**dadurch gekennzeichnet, dass**
aus der Mehrzahl von Sendemodulen (12, 18, 19) und Empfangsmodulen (13, 14, 15) eine aktuelle Konfiguration aktiver Sende- und Empfangsmodule durch die Ansteuerungsvorrichtung (16) frei wählbar und vorzugsweise auch in zeitlicher Abfolge mehrere unterschiedliche Konfigurationen auswählbar sind.

6. Vorrichtung nach einem der vorangehenden Ansprüche,
**dadurch gekennzeichnet, dass**
eine Synchronzeiterzeugungsvorrichtung (20) vorgesehen ist, die mit der Ansteuerungsvorrichtung (16) und dem mindestens einen Sendemodul (12, 18, 19) und der Mehrzahl von Empfangsmodulen (13, 14, 15) in Wirkverbindung steht.

7. Vorrichtung nach einem der vorangehenden Ansprüche,
**dadurch gekennzeichnet, dass** Lageinformationen mit Methoden der Trigonometrie aus Signallaufzeiten, Phase und/oder Betrag errechnet werden.

8. Vorrichtung nach einem der vorangehenden Ansprüche,
**dadurch gekennzeichnet, dass**
auf dem Sende-/Empfangsarray (11) mindestens ein Sendemodul (12) und mindestens ein Empfangsmodul (13) zu einer gemeinsamen Sende-/Empfangs-Baueinheit (21) zusammengefasst sind.

9. Vorrichtung nach Anspruch 6
**dadurch gekennzeichnet, dass**
die gemeinsamen Sende-/Empfangs-Baueinheiten (21) jeweils über eine eigene Sendeelektronik (22) und/oder eine eigene Empfangselektronik (23) verfügen.

10. Vorrichtung nach Anspruch 6 oder 7,
**dadurch gekennzeichnet, dass**
die das Sende-/Empfangsarray (11) ausbildenden Sende-/EmpfangsBaueinheiten (21) in reihenförmiger Anordnung aneinander liegen und mindestens in einer Erstreckung eine Reihe, weiter bevorzugt drei Reihen, noch weiter bevorzugt fünf Reihen, noch weiter bevorzugt 7 Reihen, noch weiter bevorzugt mindestens 10 Reihen benachbart nebeneinander angeordnet sind und weiter vorzugsweise mindestens zwei, weiter bevorzugt mindestens drei, weiter bevorzugt mindestens sieben, weiter bevorzugt mindestens 80 Sende-/Empfangs-Baueinheiten (21) vorliegen.

11. Verfahren zur Auf- und/oder Einbringung von pastösen oder flüssigen Stoffen auf und/oder in ein Karosseriebauteil mit einer Vorrichtung nach Anspruch 1, umfassend die Schritte:
- Erkennen einer Struktur, insbesondere einer Oberflächenstruktur, eines Loches und/oder eines Hohlraumes, eines Karosseriebauteils mittels Mikrowellen- und/oder Millimeterwellen,
- Auf- und/oder Einbringen eines pastösen oder flüssigen Stoffes auf und/oder in ein Karosseriebauteil, insbesondere Auf- und/oder Einbringen von Wachs auf und/oder in das Karosseriebauteil oder Auf- und/oder Einbringen von Schaumstoff auf und/oder in das Karosseriebauteil, wobei
- das Sendemodul (12, 18, 19) zur Aussendung eines Kurzzeitpulses mit hohem spektralen Anteil veranlasst wird, Signalanteile, die im Inneren des Objekts gebrochen oder reflektiert wurden, in einem einstellbaren Empfangszeitfenster als Empfangsdaten an den mehreren in fester relativer Positionierung zueinander angeordneten Empfangsmodulen (13, 14, 15) als Empfangsdaten empfangen werden.

12. Verfahren nach Anspruch 11, wobei durch das Verfahren ein Bild des zu vermessenden Loches und/oder Hohlraumes erzeugt wird, unter Verwendung eines Sende-/Empfangsarrays (11), auf dem mindestens ein Sendemodul (12), das im Mikrowellen- und/oder Millimeterwellenbereich arbeitet, sowie eine Mehrzahl von Empfangsmodulen (13, 14, 15), die Mikrowellen- und/oder Millimeterwellen in einer festen relativen Positionierung zueinander angeordnet sind,
umfassend die folgenden Schritte:
- Veranlassen des Sendemoduls (12) zur Aussendung eines Signals,
- Empfangen von Signalanteilen, die an einer Oberfläche oder im Inneren des Karosseriebauteils gebrochen oder reflektiert wurden, als Empfangsdaten und
- Errechnen eines Bildes aus den gewonnenen Empfangsdaten.

13. Verfahren nach Anspruch 11 oder 12,
**dadurch gekennzeichnet, dass**
das Sendemodul (12, 18, 19) zur Aussendung eines Signals mit zeitlich veränderbarer Frequenz veranlasst wird, wobei Phase und Betrag des reflektierten und/oder gebrochenen Signals jeweils an dem dem Empfangsmodul (13, 14, 15) zugeordneten Ort relativ zum Sendemodul (12) als Empfangsdaten detektiert werden.

14. Verfahren nach Anspruch 11 oder 12,
**dadurch gekennzeichnet, dass**
die Empfangsmodule (13, 14, 15) Phase, Betrag und/oder spezifische Frequenzanteile des reflektierten oder gebrochenen Signals detektieren.

15. Verfahren nach Anspruch 11, 12 oder 13,
**dadurch gekennzeichnet, dass**
eine Mehrzahl von Sendemodulen (12, 18, 19), die in einer festen relativen Positionierung zueinander auf dem Sende-/Empfangsarray (11) angeordnet sind, Verwendung finden und dass die Schritte
- Veranlassen des Sendemoduls (12, 18, 19) zur Aussendung eines Signals mit zeitlich veränderbarer Frequenz und
- Empfangen von Signalanteilen, die an der Oberfläche reflektiert bzw. gebrochen werden, an den mehreren Empfangsmodulen (13, 14, 15) mehrfach mit unterschiedlich ausgewählter Konfiguration jeweils aktueller Sende- und Empfangsmodule durchgeführt werden und
- dass aus sämtlichen gewonnenen Empfangsdaten das Bild der Oberfläche errechnet wird.

16. Verfahren nach Anspruch 11, 12 oder 13,
**dadurch gekennzeichnet, dass**
eine Mehrzahl von Sendemodulen (12, 18, 19), die in einer festen relativen Positionierung zueinander auf dem Sende-/Empfangsarray (11) angeordnet sind, Verwendung finden und dass die Schritte
- Veranlassen des Sendemoduls (12, 18, 19) zur Aussendung eines Kurzzeitpulses mit hohem spektralen Anteil und
- Empfangen von Signalanteilen, die im Inneren reflektiert bzw. gebrochen werden, an den mehreren Empfangsmodulen (13, 14, 15) mehrfach mit unterschiedlich ausgewählter Konfiguration jeweils aktueller Sende- und Empfangsmodule durchgeführt werden und
- dass aus sämtlichen gewonnenen Empfangsdaten das Bild der Oberfläche errechnet wird.

17. Verfahren nach einem der Ansprüche 11 bis 14,
**dadurch gekennzeichnet, dass**
die Ansteuervorrichtung (16), das mindestens eine Sendemodul (12, 18, 19) und die Empfangsmodule (13, 14, 15) über eine Synchronzeiterzeugungsvorrichtung (20) gemeinsam synchronisiert werden.

18. Verfahren nach einem der Ansprüche 11 bis 14,
**dadurch gekennzeichnet, dass**
das mindestens eine Sendemodul (12, 18, 19) und die Empfangsmodule (13, 14, 15) mit der Ansteuervorrichtung (16) über BUS-Technologie miteinander kommunizieren.

## Claims

1. Device (1) for applying and/or introducing pasty or liquid substances to and/or into a bodywork component (4), comprising a recognition unit (6) for structure, opening and/or cavity recognition of the bodywork component, wherein the recognition unit operates with microwave waves and/or millimetre waves,
the recognition unit (6) comprising a transmitting/receiving array (11), on which are arranged at least one transmitting module (12), which operates in the microwave range and/or millimetre wave range, and a plurality of receiving modules (13, 14, 15), which receive in the microwave range and/or millimetre wave range, in a fixed positioning relative to one another,
wherein in addition an activating device (16), which can address, particularly individually, the at least one transmitting module (12) and the plurality of receiving modules (13, 14, 15), is provided,
wherein the transmitting module (12) is activated by the activating device (16) for transmission of a signal,
wherein the receiving modules (13, 14, 15) are configured for detection of reflected and/or refracted signals
and wherein a computer unit (17), which computes from the obtained received data of the plurality of receiving modules (13, 14, 15) an image of the opening and/or cavity to be measured, is provided,
wherein the transmitting module (12) is activated by the activating device (16) for transmission of a transient pulse, which transient pulse penetrates the body to be measured and is reflected and/or refracted in the interior at cavity walls,
wherein the receiving modules (13, 14, 15) detect phase, amount and/or specific frequency components of the reflected signal at the respective location, which is associated with the receiving module (13, 14, 15), relative to the transmitting module (12) as received data, wherein the transient pulse is not longer than 1 ns or not longer than 100 ps, or not longer than 20 ps and a reception time window within which the receiving modules (13, 14, 15) detect radiation is predeterminable.

2. Device according to claim 1, **characterised in that** the transmitting module (12) is activated by the activating device (16) for transmission of a signal at a frequency variable with time, wherein the receiving modules (13, 14, 15) detect phase and amount of the reflected signal at the respective location, which is associated with the receiving module (13, 14, 15), relative to the transmitting module (12) as received data.

3. Device according to one of the preceding claims, **characterised in that** a plurality of transmitting modules (12, 18, 19), which can be respectively individually activated by the activating device (16), is provided on the transmitter/receiver array (11) in fixed positioning relative to one another.

4. Device according to any one of the preceding claims, **characterised in that** the activating device (16) communicates by way of BUS technology with the one or more transmitting modules (12, 18, 19) and the receiving modules (13, 14, 15).

5. Device according to any one of the preceding claims, **characterised in that** a current configuration of active transmitting and receiving modules is freely selectable by the activating device (16) from the plurality of transmitting modules (12, 18, 19) and receiving modules (13, 14, 15) and several different configurations are also preferably selectable in time sequence.

6. Device according to any one of the preceding claims, **characterised in that** a synchronisation time generating device (20), which is in operative connection with the activating device (16) and the at least one transmitting module (12, 18, 19) and the plurality of receiving modules (13, 14, 15), is provided.

7. Device according to any one of the preceding claims, **characterised in that** positional data are computed by methods of trigonometry from signal transit times, phase and/or amount.

8. Device according to any one of the preceding claims, **characterised in that** at least one transmitting module (12) and at least one receiving module (13) are combined into a common transmitting/receiving module (21) at the transmitter/receiver array (11).

9. Device according to claim 6, **characterised in that** the common transmitting/receiving modules (21) each have an individual electronic transmitting device (22) and/or an individual electronic receiving device (23).

10. Device according to claim 6 or 7, **characterised in that** the transmitting/receiving modules (21) forming the transmitter/receiver array (11) lie against one another in a row-shaped arrangement and at least in one dimension a row, more preferably three rows, even more preferably five rows, still more preferably seven rows, yet more preferably at least ten rows, are arranged adjacently to one another and further preferably at least two, more preferably at least three, more preferably at least seven, more preferably at least eighty transmitting/receiving modules (21) are present.

11. Method for applying and/or introducing pasty or liquid substances to and/or into a bodywork component by a device according to claim 1, comprising the steps of:
- recognising a structure, particularly a surface structure, an opening and/or a cavity, of a bodywork component by means of microwave waves and/or millimetre waves,
- applying and/or introducing a pasty or liquid substance to and/or into a bodywork component, particularly applying and/or introducing wax to and/or into the bodywork component or applying and/or introducing foam to and/or into the bodywork component, wherein
- the transmitting module (12, 18, 19) is arranged for transmission of a transient pulse with a high spectral component, signal components, which were refracted or reflected in the interior of the object, being received as received data in a settable reception time window at the several receiving modules (13, 14, 15) arranged in fixed positioning relative to one another.

12. Method according to claim 11, wherein an image of the opening and/or cavity, which is or are to be measured, is produced by the method with use of a transmitter/receiver array (11), at which at least one transmitting module (12), which operates in the microwave range and/or millimetre wave range, and several receiving modules (13, 14, 15), which operate with microwave waves and/or millimetre waves, are arranged at a fixed positioning relative to one another, comprising the following steps:
- arranging the transmitting module (12) for transmission of a signal,
- receiving signal components, which were refracted or reflected at a surface or in the interior of the bodywork component, as received data and
- computing an image from the obtained received data.

13. Method according to claim 11 or 12, **characterised in that** the transmitting module (12, 18, 19) is arranged for transmission of a signal at a frequency variable with time, wherein phase and amount of the reflected and/or refracted signal are detected as received data at the location, which is associated with the receiving module (13, 14, 15), relative to the transmitting module (12).

14. Method according to claim 11 or 12, **characterised in that** the receiving modules (13, 14, 15) detect phase, amount and/or specific frequency components of the reflected or refracted signal.

15. Method according to claim 11, 12 or 13, **characterised in that** a plurality of transmitting modules (12, 18, 19), which are arranged in a fixed positioning relative to one another at the transmitter/receiver array (11), is used and that the steps of
- arranging the transmitting module (12, 18, 19) for transmission of a signal at a frequency variable with time and
- receiving signal components, which are reflected or refracted at the surface, are performed at the plurality of receiving modules (13, 14, 15) multiple times with a differently selected configuration of respectively current transmitting and/or receiving modules, and
- that the image of the surface is computed from all obtained received data.

16. Method according to claim 11, 12 or 13, **characterised in that** a plurality of transmitting modules (12, 18, 19), which are arranged in a fixed positioning relative to one another at the transmitter/receiver array (11), is used and that the steps of
- arranging the transmitting module (12, 18, 19) for transmission of a transient pulse with high spectral component and
- receiving signal components, which are reflected or refracted in the interior, are performed at the plurality of receiving modules (13, 14, 15) multiple times with a differently selected configuration of respectively current transmitting and receiving modules, and
- that the image of the surface is computed from all obtained received data.

17. Method according to any one of claims 11 to 14, **characterised in that** the activating device (16), the at least one transmitting module (12, 18, 19) and the receiving modules (13, 14, 15) are synchronised in common by way of a synchronisation time generating device (20).

18. Method according to any one of claims 11 to 14, **characterised in that** the at least one transmitting module (12, 18, 19) and the receiving modules (13, 14, 15) communicate with the activating device (16) by way of BUS technology with one another.

## Revendications

1. Dispositif (1) permettant l'application et/ou l'incorporation de substances pâteuses ou liquides sur et/ou dans un élément de carrosserie (4), comprenant une unité de détection (6) qui permet la détection de structures, de trous et/ou de cavités de l'élément de carrosserie, dans lequel l'unité de détection fonctionne avec des microondes et/ou des ondes millimétriques,
l'unité de détection (6) comprenant un réseau d'émetteur et de récepteur (11) sur lequel au moins un module d'émission (12) fonctionne à l'intérieur de la plage des microondes et/ou des ondes millimétriques ainsi qu'une pluralité de modules de réception (13, 14, 15), qui reçoivent à l'intérieur de la plage des microondes et/ou des ondes millimétriques, et qui sont disposés en un positionnement relatif fixe les uns par rapport aux autres,
un dispositif de commande (16) étant en outre prévu, qui est capable d'effectuer l'adressage, en particulier individuellement, dudit au moins un module d'émission (12) ainsi que de la pluralité de modules de réception (13, 14, 15), le module d'émission (12) étant commandé par le dispositif de commande (16) pour émettre un signal,
les modules de réception (13, 14, 15) étant conçus de manière à détecter des signaux réfléchis et/ou interrompus, et
une unité de calcul (17) étant prévue, qui calcule, à partir des données de réception de la pluralité de modules de réception (13, 14, 15) obtenues, une image du trou et/ou de la cavité à mesurer, le module d'émission (12) étant commandé par le dispositif de commande (16) pour émettre une impulsion de courte durée, ladite impulsion de courte durée pénétrant à l'intérieur du corps à mesurer et est réfléchie ou interrompue à l'intérieur sur les parois de la cavité,
les modules de réception (13, 14, 15) détectant, en tant que données de réception, la phase, l'amplitude et/ou les fractions de fréquence spécifiques du signal réfléchi respectivement à l'endroit affecté au module de réception (13, 14, 15) par rapport au module d'émission (12), l'impulsion de courte durée n'étant pas supérieure à 1 ns ou n'étant pas supérieure à 100 ps, ou étant supérieure ou égale à 20 ps, et une fenêtre temporelle de réception pouvant être prédéfinie, à l'intérieur de laquelle les modules de réception (13, 14, 15) détectent un rayonnement.

2. Dispositif selon la revendication 1, **caractérisé en ce que** le module d'émission (12) est commandé par le dispositif de commande (16) pour émettre un signal à fréquence variable dans le temps, les modules de réception (13, 14, 15) détectant, en tant que données de réception, la phase et l'amplitude du signal réfléchi respectivement à l'endroit affecté au module de réception (13, 14, 15) par rapport au module d'émission (12).

3. Dispositif selon l'une quelconque des revendications précédentes, **caractérisé en ce que**, sur le réseau d'émetteur et de récepteur (11), il est prévu une pluralité de modules d'émission (12, 18, 19) en un positionnement fixe les uns par rapport aux autres qui peuvent être commandés respectivement individuellement par le dispositif de commande (16).

4. Dispositif selon l'une quelconque des revendications précédentes, **caractérisé en ce que** le dispositif de commande (16) communique avec un ou plusieurs module(s) d'émission (12, 18, 19) ainsi qu'avec les modules de réception (13, 14, 15) par l'intermédiaire d'une technologie de type bus.

5. Dispositif selon l'une quelconque des revendications précédentes, **caractérisé en ce que**, parmi la pluralité de modules d'émission (12, 18, 19) et de modules de réception (13, 14, 15), une configuration actuelle de modules d'émission et de réception actifs peut être choisie librement par le dispositif de commande (16) et, de préférence également, plusieurs configurations différentes peuvent être sélectionnées dans un ordre chronologique.

6. Dispositif selon l'une quelconque des revendications précédentes, **caractérisé en ce qu'**il est prévu un dispositif générateur de synchronisation temporelle (20) qui est en liaison active avec le dispositif de commande (16) ainsi qu'avec ledit au moins un module d'émission (12, 18, 19) et la pluralité de modules de réception (13, 14, 15).

7. Dispositif selon l'une quelconque des revendications précédentes, **caractérisé en ce que** les informations de position sont calculées à l'aide des méthodes de trigonométrie à partir des temps de propagation des signaux, de la phase et/ou de l'amplitude.

8. Dispositif selon l'une quelconque des revendications précédentes, **caractérisé en ce qu'**au moins un module d'émission (12) et au moins un module de réception (13) sont regroupés sur le réseau d'émetteur et de récepteur (11) de manière à former une unité modulaire d'émission/réception (21) commune.

9. Dispositif selon la revendication 6, **caractérisé en ce que** les unités modulaires d'émission/réception (21) communes disposent respectivement de leur propre système électronique d'émission (22) et/ou de leur propre système électronique de réception (23).

10. Dispositif selon la revendication 6 ou 7, **caractérisé en ce que** les unités modulaires d'émission/réception (21) qui constituent le réseau d'émetteur et de récepteur (11) sont disposées les unes contre les autres conformément à un agencement en forme de rangées et, au moins dans une extension, une rangée, de préférence trois rangées, plus préférablement cinq rangées, plus préférablement 7 rangées, et plus préférablement au moins 10 rangées sont disposées de manière à être disposées mutuellement côte à côte et, de préférence au moins deux, de préférence au moins trois, de préférence au moins 7, et de préférence au moins 80 unités modulaires d'émission/réception (21) sont disponibles.

11. Procédé permettant l'application et/ou l'incorporation de substances pâteuses ou liquides sur et/ou dans un élément de carrosserie à l'aide d'un dispositif selon la revendication 1, ledit procédé comprenant les étapes suivantes :
- détecter une structure, en particulier une structure superficielle, un trou et/ou une cavité, à l'intérieur d'un élément de carrosserie en utilisant des microondes et/ou des ondes millimétriques, et
- appliquer et/ou incorporer des substances pâteuses ou liquides sur et/ou dans un élément de carrosserie, en particulier appliquer et/ou incorporer de la de cire sur et/ou dans l'élément de carrosserie ou appliquer et/ou incorporer de la mousse sur et/ou dans l'élément de carrosserie,
dans lequel le module d'émission (12, 18, 19) est amené à émettre une impulsion de courte durée à haute fraction spectrale, des parties de signaux qui ont été interrompus ou réfléchis à l'intérieur de l'objet étant reçues, en tant que données de réception, à l'intérieur d'une fenêtre temporelle de réception réglable au niveau de la pluralité de modules de réception (13, 14, 15) disposés en un positionnement relatif fixe les uns par rapport aux autres.

12. Procédé selon la revendication 11, dans lequel une image du trou et/ou de la cavité à mesurer est générée par ledit procédé, en utilisant un réseau d'émetteur et de récepteur (11) sur lequel au moins un module d'émission (12) fonctionne à l'intérieur de la plage des microondes et/ou des ondes millimétriques ainsi qu'une pluralité de modules de réception (13, 14, 15) qui sont disposés en un positionnement relatif fixe les uns par rapport aux autres avec des microondes et/ou des ondes millimétriques, ledit procédé comprenant les étapes suivantes :
- amener le module d'émission (12) à émettre un signal,
- recevoir des parties de signaux qui ont été interrompus ou réfléchis sur une surface ou à l'intérieur de l'élément de carrosserie en tant que données reçues, et
- calculer une image à partir des données de réception obtenues.

13. Procédé selon la revendication 11 ou 12, **caractérisé en ce que** le module d'émission (12, 18, 19) est amené à émettre un signal à fréquence variable dans le temps, la phase et l'amplitude du signal réfléchi et/ou interrompu étant détectées, en tant que données de réception, respectivement à l'endroit affecté au module de réception (13, 14, 15) par rapport au module d'émission (12).

14. Procédé selon la revendication 11 ou 12, **caractérisé en ce que** les modules de réception (13, 14, 15) détectent la phase, l'amplitude et/ou les fractions de fréquence spécifiques du signal réfléchi ou interrompu.

15. Procédé selon la revendication 11 ou 12 ou 13, **caractérisé par** l'utilisation d'une pluralité de modules d'émission (12, 18, 19), qui sont disposés sur le réseau d'émetteur et de récepteur (11) en un positionnement relatif fixe les uns par rapport aux autres, et en ce que ledit procédé comprend les étapes suivantes :
- amener le module d'émission (12, 18, 19) à émettre un signal à fréquence variable dans le temps, et
- recevoir des parties de signaux, qui sont réfléchis ou interrompus à la surface, exécutés plusieurs fois au niveau de la pluralité de modules de réception (13, 14, 15) avec différentes configurations sélectionnées de modules d'émission et de réception actualisés,
et **caractérisé en ce que** l'image de la surface est calculée à partir de toutes les données de réception obtenues.

16. Procédé selon la revendication 11, 12 ou 13, **caractérisé par** l'utilisation d'une pluralité de modules d'émission (12, 18, 19), qui sont disposés sur le réseau d'émetteur et de récepteur (11) en un positionnement relatif fixe les uns par rapport aux autres, et en ce que ledit procédé comprend les étapes suivantes :
- amener le module d'émission (12, 18, 19) à émettre une impulsion de courte durée à haute fraction spectrale, et
- recevoir des parties de signaux, qui sont réfléchis ou interrompus à la surface, exécutés plusieurs fois au niveau de la pluralité de modules de réception (13, 14, 15) avec différentes configurations sélectionnées de modules d'émission et de réception actualisés,
et **caractérisé en ce que** l'image de la surface est calculée à partir de toutes les données de réception obtenues.

17. Procédé selon l'une quelconque des revendications 11 à 14, **caractérisé en ce que** le dispositif de commande (16), ledit au moins un module d'émission (12, 18, 19) et les modules de réception (13, 14, 15) sont synchronisés les uns avec les autres par l'intermédiaire d'un dispositif générateur de synchronisation temporelle (20).

18. Procédé selon l'une quelconque des revendications 11 à 14, **caractérisé en ce que** ledit au moins un modulé d'émission (12, 18, 19) et les modules de réception (13, 14, 15) communiquent entre eux avec le dispositif de commande (16) par l'intermédiaire de la technologie de type bus.
